# EUROPÄISCHE PATENTANMELDUNG

(11) **EP 3 670 257 A1**
(43) Veröffentlichungstag der Anmeldung: **24.06.2020**
(21) Anmeldenummer: 18213382.7
(22) Anmeldetag: 18.12.2018
(51) Int. Cl.: B60Q 1/076, B60Q 1/068

(54) **EINSTELLVORRICHTUNG FÜR EINEN KRAFTFAHRZEUGSCHEINWERFER**

(71) Anmelder: ZKW Group GmbH, 3250 Wieselburg (AT)
(72) Erfinder: Seel, Reinhard, 3200 Ober-Grafendorf (AT); Bauer, Günter, 3372 Blindenmarkt (AT)
(74) Vertreter: Patentanwaltskanzlei Matschnig & Forsthuber OG

(57) **Zusammenfassung**

Einstellvorrichtung (10) zur Einstellung zumindest einer optisch relevanten Baueinheit (20) eines Kraftfahrzeugscheinwerfers, welche Einstellvorrichtung (10) Folgendes umfasst:
- eine Antriebseinrichtung (100) mit einem entlang einer Verschubachse (X) verstellbaren ersten Stellelement (110), welches einen ersten Eingriffsabschnitt (111) aufweist,
- ein mit dem ersten Stellelement (110) in mechanischen Eingriff stehendes Übertragungselement (200), welches einen zu dem ersten Eingriffsabschnitt (111) korrespondierenden ersten Gegeneingriffsabschnitt (210) aufweist,
- eine Lagerungsbuchse (300), in welcher das Übertragungselement (200) drehbar um die Verschubachse (X) gelagert ist, wobei die Lagerungsbuchse (300) mit einem Tragerahmen (400) fest verbunden ist, wobei auf dem Tragerahmen (400) die zumindest eine Baueinheit (20) angeordnet ist, und
- ein zweites Stellelement (500), das um die Verschubachse (X) drehbar gelagert ist und einen zweiten Eingriffsabschnitt (510) aufweist, wobei das Übertragungselement (200) einen zweiten Gegeneingriffsabschnitt (220) aufweist, welcher zweite Gegeneingriffsabschnitt (220) dem ersten Gegeneingriffsabschnitt (210) des Übertragungselements (200) auf der Verschubachse (X) gegenüberliegend angeordnet ist, und wobei der zweite Gegeneingriffsabschnitt (220) mit dem zweiten Eingriffsabschnitt (510) in mechanischem Eingriff steht.

## Beschreibung

Die Erfindung betrifft eine Einstellvorrichtung zur Einstellung zumindest einer optisch relevanten Baueinheit eines Kraftfahrzeugscheinwerfers.

Ferner betrifft die Erfindung einen Kraftfahrzeugscheinwerfer mit einem Gehäuse und zumindest einer erfindungsgemäßen Einstellvorrichtung.

Zur gesetzeskonformen Einstellung des mit einem Kraftfahrzeugscheinwerfer erzeugten Lichtbildes ist es notwendig, dass ein oder mehrere optisch relevante Baueinheiten des Scheinwerfers unter anderem in Höhenrichtung und/oder seitlich einstellbar sind. Bei einer solchen relevanten optischen Baueinheit handelt es sich beispielsweise um ein Lichtmodul, etwa bestehend aus zumindest einer Lichtquelle, zumindest einem Reflektor, zumindest einer Linse etc.; es kann sich aber auch um einzelne Bauteile wie Reflektoren, Linsen etc. handeln, die entsprechend verstellt werden.

Dabei ist die zumindest eine optisch relevante Baueinheit häufig um eine oder mehrere Achsen, beispielsweise um eine horizontale und/oder vertikale Achse verschwenkbar in dem Scheinwerfer gelagert. Beispielsweise sind eine oder mehrere Lichtmodule an einem Tragerahmen gelagert, und der Tragerahmen ist um eine oder zwei Achsen, wie vorstehend beschrieben, verschwenkbar gelagert.

Einstellvorrichtungen zur Einstellung von optisch relevanten Baueinheiten von Kraftfahrzeugscheinwerfern, wie beispielsweise Lichtquellen, Reflektoren und/oder Linsen, erlauben eine Anpassung des durch den Scheinwerfer erzeugten Lichtbildes an vorgegebene Anforderungen. Dies erlaubt es, dass Abweichungen von Sollvorgaben, die beispielsweise nach einem Einbauvorgang des Scheinwerfers in ein Kraftfahrzeug festgestellt werden, nachträglich durch Verwendung einer Einstellvorrichtung ausgeglichen werden können.

Eine typische Aufgabe von Einstellvorrichtungen liegt in der Anpassung der Leuchtweite eines Scheinwerfers, wobei dieses technische Gebiet insbesondere unter dem Ausdruck "Leuchtweitenregulierung" - kurz LWR genannt - bekannt geworden ist.

Zur Verstellung ist in der Regel zumindest eine Antriebseinrichtung vorgesehen, wobei die Antriebseinrichtung üblicherweise manuell betätigbar ist. Beispielsweise umfasst die Antriebseinrichtung ein Drehrad bzw. eine Einstellschraube, deren Drehbewegung über eine geeignete Mechanik in eine Linearbewegung eines Gleitelements umgesetzt wird, welches in entsprechenden Gleitbahnen in dem Scheinwerfergehäuse verschiebbar geführt ist. Ein Verstellpunkt der optisch relevanten Baueinheit, z.B. des Tragerahmens, an welchem die Baueinheit angebracht ist, ist in dem Gleitelement gelagert, sodass bei einem Verschieben des Gleitelements die Baueinheit bzw. der Tragerahmen verschwenkt werden.

Es ist eine Aufgabe der Erfindung eine verbesserte Einstellvorrichtung zur Einstellung zumindest einer optisch relevanten Baueinheit bereitzustellen.

Diese Aufgabe wird dadurch gelöst, dass die Einstellvorrichtung Folgendes umfasst:
- eine Antriebseinrichtung mit einem entlang einer Verschubachse linear verstellbaren ersten Stellelement, welches drehfest angeordnet ist und einen ersten Eingriffsabschnitt aufweist,
- ein mit dem ersten Stellelement in mechanischen Eingriff stehendes Übertragungselement, wobei das Übertragungselement einen zu dem ersten Eingriffsabschnitt des ersten Stellelements korrespondierenden ersten Gegeneingriffsabschnitt aufweist,
- eine Lagerungsbuchse, in welcher das Übertragungselement mittels einem Lagerungsabschnitt des Übertragungselements drehbar um die Verschubachse gelagert ist, wobei die Lagerungsbuchse mit einem Tragerahmen fest verbunden ist, wobei auf dem Tragerahmen die zumindest eine optisch relevante Baueinheit angeordnet ist, und
- ein zweites Stellelement, das um die Verschubachse drehbar gelagert ist und einen zweiten Eingriffsabschnitt aufweist, wobei das Übertragungselement einen zweiten Gegeneingriffsabschnitt aufweist, welcher zweite Gegeneingriffsabschnitt dem ersten Gegeneingriffsabschnitt des Übertragungselements auf der Verschubachse gegenüberliegend angeordnet ist, und wobei der zweite Gegeneingriffsabschnitt mit dem zweiten Eingriffsabschnitt in mechanischen Eingriff steht, und wobei das zweite Stellelement in Kombination mit dem ersten Eingriffsabschnitt des ersten Stellelements dazu eingerichtet ist, eine Drehbewegung des zweiten Stellelements in eine Hubbewegung des Übertragungselements entlang der Verschubachse zu wandeln.

Die Lagerungsbuchse greift dergestalt an dem Tragerahmen bzw. indirekt an zumindest einer optisch relevanten Baueinheit, dass eine Bewegung des ersten als auch des zweiten Stellelements in eine geänderte Ausrichtung der optisch relevanten Baueinheit gewandelt werden kann. Bei der optisch relevanten Baueinheit kann es sich beispielsweise um Blenden(anordnungen), Lichtquellen, Reflektoren, Linsen, ganze Lichtmodule bzw. Baugruppen etc. handeln.

Weiters wird die Feinjustierung der Bewegung des Übertragungselements entlang der Verschubachse über das zweite Stellelement durch die Gewindesteigung des Gewindes des ersten Stellelements und des dazu korrespondierenden Gegengewindes des Übertragungselements bestimmt.

Es kann vorgesehen sein, dass der Lagerungsabschnitt einstückig bzw. einteilig mit dem Übertragungselement ausgebildet ist, wobei vorzugsweise das Übertragungselement mit dem Gegengewinde und dem Lagerungsabschnitt und/oder weiteren Elementen des Übertragungselements einstückig bzw. einteilig ausgebildet ist.

Es kann vorgesehen sein, dass das zweite Stellelement als Stellstange ausgebildet ist. Die Längsachse der Stellstange erstreckt sich hierbei entlang der Verschubachse.

Es kann vorgesehen sein, dass der erste Eingriffsabschnitt des ersten Stellelements als Gewinde ausgebildet ist und der erste Gegeneingriffsabschnitt des Übertragungselements als erste Öffnung mit einem zu dem Gewinde korrespondierenden Gegengewinde ausgebildet ist, wobei das Übertragungselement über das Gegengewinde zumindest teilweise auf dem ersten Stellelement aufgeschraubt ist.

Ferner kann vorgesehen sein, dass der zweite Gegeneingriffsabschnitt des Übertragungselements als zweite Öffnung ausgebildet ist, wobei das zweite Stellelement verschiebbar entlang der Verschubachse in der zweiten Öffnung des Übertragungselements gelagert ist.

Es kann jedoch auch vorgesehen sein, dass der erste Gegeneingriffsabschnitt des Übertragungselements als Gewinde ausgebildet ist und der erste Eingriffsabschnitt des ersten Stellelements als erste Öffnung mit einem zu dem Gewinde korrespondierenden Gegengewinde ausgebildet ist, wobei das erste Stellelement über das Gegengewinde zumindest teilweise auf dem Übertragungselement auf- bzw. angeschraubt ist.

Es kann auch vorgesehen sein, dass der zweite Eingriffsabschnitt des zweiten Stellelements als zweite Öffnung ausgebildet ist, wobei das der zweite Gegeneingriffsabschnitt des Übertragungselements verschiebbar entlang der Verschubachse in der zweiten Öffnung des zweiten Stellelements gelagert ist.

Eine Drehbewegung des zweiten Stellelements, welche vorzugsweise in Bezug auf das Übertragungselement bzw. den Tragerahmen bewegungsfest angeordnet ist, beispielsweise an einem Gehäuse eines Kraftfahrzeugscheinwerfers, führt zu einer Drehbewegung des Übertragungselements aufgrund der mechanisch ineinandergreifenden zweiten Eingriffs- bzw. zweiten Gegeneingriffsabschnitte, wobei die auf das Übertragungselement übertragene Drehbewegung des zweiten Stellelements eine Hubbewegung des Übertragungselements erzeugt, und zwar in dem Sinne, dass das Übertragungselement aufgrund des auf dem Gewinde des ersten Stellelements aufgeschraubte Gegengewinde weiter auf- und/oder abgeschraubt wird. Das erste Stellelement ist hierbei in Bezug auf das Übertragungselement drehfest angeordnet.

Mit Vorteil kann vorgesehen sein, dass das zweite Stellelement zumindest teilweise in der im Wesentlichen kreisförmigen, konzentrisch zur Verschubachse angeordneten zweiten Öffnung des Übertragungselements aufgenommen ist, wobei das Übertragungselement als Überdrehschutz elastische Zungen aufweist, die am Umfang der zweiten Öffnung angeordnet sind und sich entlang der Verschubachse erstrecken, wobei die elastischen Zungen Vorsprünge aufweisen, die dazu eingerichtet sind, in auf dem zweiten Stellelement angeordnete, korrespondierende Vertiefungen einzugreifen.

Hierbei kann vorgesehen sein, dass die Vorsprünge in Form von achsenparallelen Zapfen und die dazu korrespondierenden Vertiefungen als achsenparallele Rillen ausgeführt sind. Vorteilhafterweise kann vorgesehen sein, dass die Antriebseinrichtung als linearer Stellmotor ausgebildet ist.

Ferner kann vorgesehen sein, dass die Antriebseinrichtung in Bezug auf den Tragerahmen bewegungsfest angeordnet ist.

Es kann vorgesehen sein, dass die Einstellvorrichtung ein Blockierungselement umfasst, welches in Kombination mit einem auf der Außenseite der Übertragungselements angeordneten Anschlages eingerichtet ist, eine Drehbewegung des Übertragungselements um die Verschubachse zu begrenzen.

Der Maximal- sowie der Minimalhub des Übertragungselements bei einer Verstellung bzw. einer Drehbewegung des zweiten Stellelements entlang der Verschubachse wird durch das Blockierungselement und dem korrespondierenden, an dem Übertragungselement angeordneten Anschlag begrenzt.

Es kann vorgesehen sein, dass der Lagerungsabschnitt des Übertragungselements als symmetrische Kugelschicht geformt ist, wobei die Lagerungsbuchse eine zu der symmetrischen Kugelschicht korrespondierende Öffnung aufweist.

Eine Kugelschicht, auch Kugelscheibe genannt, ist ein Teil einer Vollkugel, der von zwei parallelen Ebenen ausgeschnitten wird. Der gekrümmte Flächenteil wird auch Kugelzone genannt.

In einer zweckmäßigen Ausführungsform kann der Tragerahmen horizontal angeordnet sein.

Weiters kann vorgesehen sein, dass die Verschubachse vertikal angeordnet ist, vorzugsweise im Wesentlichen orthogonal zum Tragerahmen angeordnet ist.

Dadurch liegt der Tragerahmen aufgrund seines Eigengewichts derart auf der Lagerbuchse bzw. der Einstellvorrichtung auf, dass kein Spiel in dem System vorhanden ist bzw. die jeweiligen "Aktuatoren" der Einstellvorrichtung vorbelastet sind. Dadurch können Toleranzketten innerhalb des Systems verkleinert bzw. verringert werden, sodass die Einstellvorrichtung insgesamt genauer ist bzw. die zumindest eine optisch relevante Baueinheit feiner justierbar ist.

Dementsprechend sind auch keine schwierig abzustimmenden Gleitelemente notwendig, wodurch ein Kraftfahrzeugscheinwerfergehäuse deutlich einfacher konstruiert und hergestellt werden kann.

Die Aufgabe wird ebenso durch einen Kraftfahrzeugscheinwerfer mit einem Gehäuse und zumindest einer optisch relevanten Baueinheit sowie mit zumindest einer erfindungsgemäßen Einstellvorrichtung gelöst.

Hierbei kann vorgesehen sein, dass die Antriebseinrichtung mit dem Gehäuse des Kraftfahrzeugscheinwerfers fest verbunden ist.

Nachfolgend wird die Erfindung anhand von beispielhaften Zeichnungen näher erläutert. Hierbei zeigt
Fig. 1A eine beispielhafte Einstellvorrichtung mit einem Antriebsmittel, welches ein erstes Stellelement aufweist, einem Übertragungselement mit elastischen Zungen, einer Lagerungsbuchse, in welcher das Übertragungselement gelagert ist und einem zweiten Stellelement,
Fig. 1B eine Querschnittsansicht der Einstellvorrichtung aus Fig. 1A,
Fig. 2 eine Querschnittsansicht durch das zweite Stellelement und der elastischen Zungen der Einstellvorrichtung aus Fig. 1A,
Fig. 3 einen beispielhaften Kraftfahrzeugscheinwerfer mit einem Gehäuse, einer beispielhaften Einstellvorrichtung und einem horizontal angeordneten Tragerahmen, der mit der Einstellvorrichtung verbunden ist,
Fig. 4 den Kraftfahrzeugscheinwerfer aus Fig. 3, wobei auf dem Tragerahmen eine optisch relevante Baueinheit angeordnet ist,
Fig. 5 eine Detailansicht der über der Lagerungsbuchse mit dem Tragerahmen verbundenen Einstellvorrichtung aus Fig. 1A, und
Fig. 6 eine Detailansicht des in der Lagerbuchse angeordneten Übertragungselements, wobei das Übertragungselement mittels einem Lagerungsabschnitt in der Lagerungsbuchse angeordnet ist.

Grundsätzlich kann es sich bei der optisch relevanten Baueinheit aber um ein Einzelteil eines Kraftfahrzeugscheinwerfers oder einer Leuchteinheit, etwa um einen Reflektor, eine Linse, eine Lichtquelle, eine Blendenanordnung etc. handeln, oder die optisch relevante Baueinheit umfasst ein oder mehrere solcher Bauteile oder ein oder mehrere Leuchteinheiten auf einem gemeinsamen Träger, der verschwenkbar ist.

Im Folgenden wird der Einfachheit halber von einem Lichtmodul als optisch relevante Baueinheit ausgegangen.

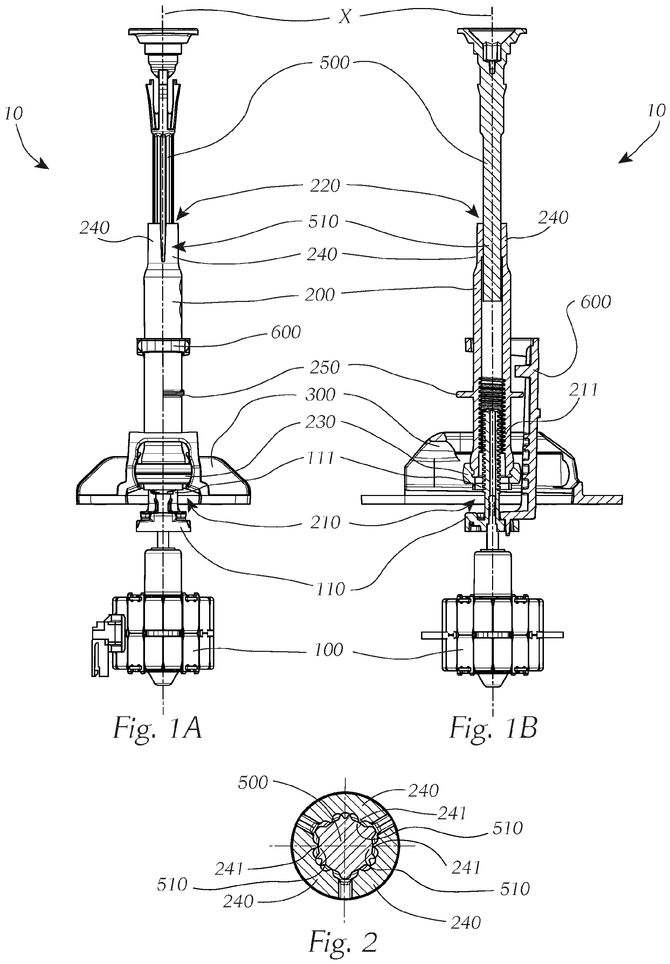

**Fig. 1A** zeigt eine beispielhafte Einstellvorrichtung **10** zur Einstellung zumindest einer optisch relevanten Baueinheit eines Kraftfahrzeugscheinwerfers, welche Einstellvorrichtung **10** eine Antriebseinrichtung **100**, welcher als linearer Stellmotor ausgebildet sein kann, mit einem entlang einer Verschubachse **X** linear verstellbaren ersten Stellelement **110**, welches drehfest angeordnet ist und einen ersten Eingriffsabschnitt aufweist, umfasst. Der erste Eingriffsabschnitt ist hierbei als Gewinde **111** ausgebildet.

Ferner umfasst die Einstellvorrichtung **10** ein mit dem ersten Stellelement **110** in mechanischen Eingriff stehendes Übertragungselement **200**, wobei das Übertragungselement **200** einen zu dem Gewinde **111** des ersten Stellelements **110** korrespondierenden ersten Gegeneingriffsabschnitt aufweist, welcher als erste Öffnung **210** mit einem zu dem Gewinde **111** korrespondierenden Gegengewinde **211** ausgebildet ist.

In **Fig. 1B** ist eine Querschnittsansicht der Einstellvorrichtung **10** zu sehen, wobei das Gewinde **111** und das Gegengewinde **211**, welche ineinander greifen, besser zu erkennen sind und zu sehen ist, dass das Übertragungselement **200** über das Gegengewinde **211** auf dem ersten Stellelement **110** zumindest teilweise aufgeschraubt ist, d.h. dass ein weiteres Auf- bzw. Abschrauben noch möglich ist.

Die Einstellvorrichtung **10** umfasst weiters eine Lagerungsbuchse **300**, in welcher das Übertragungselement **200** mittels einem Lagerungsabschnitt **230** des Übertragungselements **200** drehbar um die Verschubachse **X** gelagert ist, wobei der Lagerungsabschnitt **230** in dem gezeigten Beispiel einstückig bzw. einteilig ausgebildet ist, beispielsweise durch ein Spritzgussverfahren hergestellt.

Ferner ist ein zweites Stellelement **500** in **Fig. 1A** bzw. **1B** zu sehen, das um die Verschubachse **X** drehbar gelagert ist und einen zweiten Eingriffsabschnitt **510** aufweist, wobei das Übertragungselement **200** einen zweiten Gegeneingriffsabschnitt **220** aufweist, welcher zweite Gegeneingriffsabschnitt **220** der ersten Öffnung **210** des Übertragungselements **200** auf der Verschubachse **X** gegenüberliegend angeordnet ist. Der zweite Gegeneingriffsabschnitt des Übertragungselements **200** ist hierbei als zweite Öffnung **220** ausgebildet, wobei das zweite Stellelement **500** verschiebbar entlang der Verschubachse **X** in der zweiten Öffnung **220** des Übertragungselements **200** gelagert ist.

Das zweite Stellelement **500** ist zumindest teilweise in der im Wesentlichen kreisförmigen, konzentrisch zur Verschubachse **X** angeordneten zweiten Öffnung **220** des Übertragungselements **200** aufgenommen, wie in insbesondere in **Fig.** 1B ersichtlich ist, wobei das Übertragungselement **200** als Überdrehschutz elastische Zungen **240** aufweist, die am Umfang der zweiten Öffnung **220** angeordnet sind und sich entlang der Verschubachse **X** erstrecken.

**Fig. 2** zeigt eine Querschnittsansicht durch die elastischen Zungen **240** und das zweite Stellelement **500**, wobei die elastischen Zungen **240** Vorsprünge **241** aufweisen, die dazu eingerichtet sind, in auf dem zweiten Stellelement **500** angeordnete, korrespondierende Vertiefungen **510** einzugreifen. Die Vorsprünge **241** sind in Form von achsenparallelen Zapfen und die dazu korrespondierenden Vertiefungen **510** als achsenparallele Rillen ausgeführt, welche miteinander mechanisch in Eingriff stehen, wobei das zweite Stellelement **500** in Kombination mit dem Gewinde **111** des ersten Stellelements **110** dazu eingerichtet ist, eine Drehbewegung des zweiten Stellelements **500** in eine Hubbewegung des Übertragungselements **200** entlang der Verschubachse **X** zu wandeln, wobei das Übertragungselement **200** auf dem in Bezug auf das Übertragungselement **200** feststehenden ersten Stellelement **110** weiter auf- bzw. abgeschraubt wird und dadurch eine Hubbewegung des Übertragungselements **200** erreicht wird.

Um die Drehbewegung bzw. die Hubbewegung des Übertragungselements **200** zu begrenzen, weist die Einstellvorrichtung **10** ferner ein Blockierungselement **600** auf, welches in Kombination mit einem auf der Außenseite der Übertragungselements **200** angeordneten Anschlages **250** eingerichtet ist, eine Drehbewegung des Übertragungselements **200** um die Verschubachse **X** zu begrenzen, wobei das Blockierungselement **600** und der Anschlag **250** des Übertragungselements **200** in **Fig. 1B** besser ersichtlich sind.

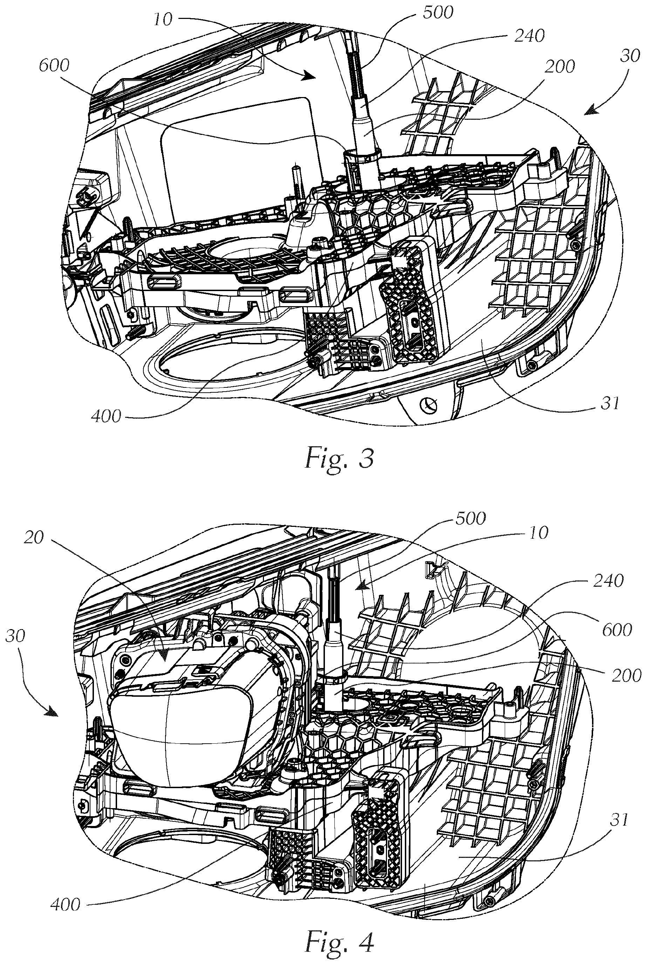

**Fig. 3** zeigt einen beispielhaften Kraftfahrzeugscheinwerfer **30** mit einem Gehäuse **31**, in welchem die zuvor beschriebene Einstellvorrichtung **10** angeordnet ist, wobei die Verschubachse **X** vertikal in dem Kraftfahrzeugscheinwerfer **30** angeordnet ist. Weiters ist zu sehen, dass die Einstellvorrichtung **10** einen Tragerahmen **400** umfasst, welcher mit der Lagerungsbuchse **300** fest verbunden ist (in **Fig. 3** nicht zu sehen) und horizontal bzw. orthogonal zur Verschubachse **X** angeordnet ist.

Es sei angemerkt, dass Begriffe wie "vertikal", "horizontal", "oben" und "unten" im Zusammenhang mit einem ordnungsgemäß verbauten Kraftfahrzeugscheinwerfer zu verstehen sind.

Auf dem Tragerahmen **400** ist eine optisch relevante Baueinheit **20** angeordnet, wie in **Fig. 4** zu sehen ist. Es sei angemerkt, dass auch mehrere optische Baueinheiten auf dem Tragerahmen **400** angeordnet werden können.

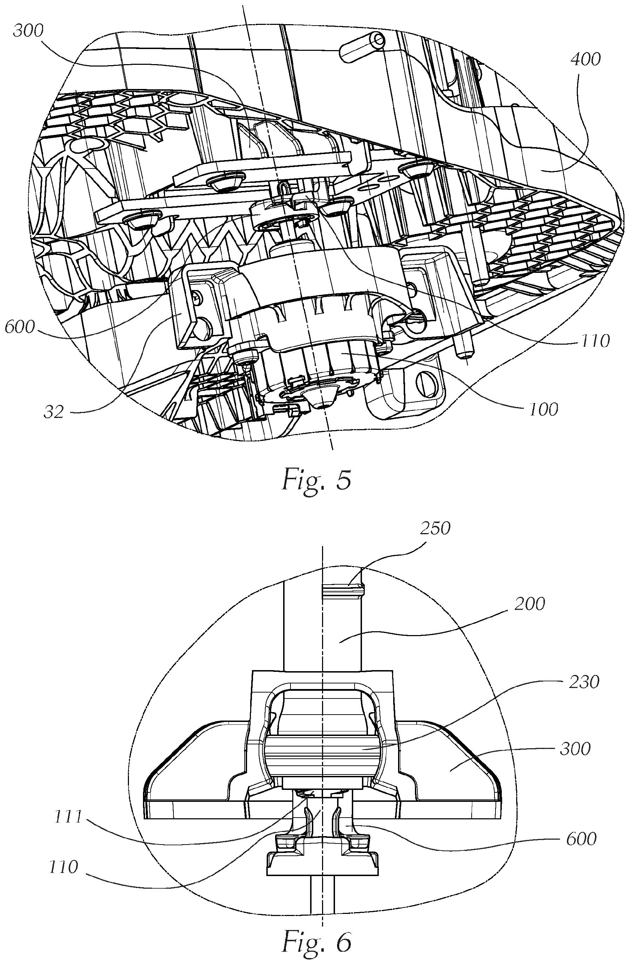

Die optisch relevante Baueinheit **20** kann einerseits ausgehend von einer Drehbewegung des zweiten Stellelements **500**, wie weiter oben beschrieben, und andererseits mit einer linearen Bewegung des ersten Stellelements **110** durch den Stellmotor **100** entlang der Verschubachse **X** bewegt bzw. in ihrer Ausrichtung verändert werden. Dabei ist, wie in **Fig. 5** zu sehen, die Antriebseinrichtung **100** durch ein Halterungselement **32** fest mit dem hier nicht dargestellten Gehäuse **31** des Kraftfahrzeugscheinwerfers **30** verbunden.

Beispielsweise kann die beispielhafte Einstellvorrichtung **100** für eine Leuchtweitenregulierung vorgesehen sein, wobei hierzu beispielsweise der Tragerahmen **400** zusätzlich an einem Punkt mit dem Gehäuse **31** des Kraftfahrzeugscheinwerfers **30** verbunden ist. Hierzu ist der Lagerungsabschnitt **230** des Übertragungselements **200** als symmetrische Kugelschicht ausgebildet, wobei **Fig. 6** eine Detailansicht der Lagerungsbuchse **300** und des in der Lagerungsbuchse **300** drehbar gelagerten Lagerungsabschnittes **230** des Übertragungselements **200** zeigt. In **Fig. 6** ist der Lagerungsabschnitt **230** - wie bereits erwähnt - als symmetrische Kugelschicht geformt, wobei die Lagerungsbuchse **300** eine zu der symmetrischen Kugelschicht korrespondierende Öffnung aufweist. Auf diese Weise kann die Lagerungsbuchse **300** eine Verkippung um eine horizontale Ebene aufweisen, wodurch auch Verkippungen des Tragerahmens **400** möglich werden, wenn dieser an einem Punkt des Gehäuses **31** des Kraftfahrzeugscheinwerfers **30** fixiert ist.

**BEZUGSZEICHENLISTE**

| | |
|---|---|
| Einstellvorrichtung | 10 |
| Optisch relevante Baueinheit | 20 |
| Kraftfahrzeugscheinwerfer | 30 |
| Gehäuse | 31 |
| Halterungselement | 32 |
| Antriebseinrichtung | 100 |
| Erstes Stellelement | 110 |
| Gewinde | 111 |
| Übertragungselement | 200 |
| Gegengewinde | 211 |
| Zweite Öffnung | 220 |
| Lagerungsabschnitt | 230 |
| Elastische Zungen | 240 |
| Vorsprünge | 241 |
| Anschlag | 250 |
| Lagerungsbuchse | 300 |
| Tragerahmen | 400 |
| Zweites Stellelement | 500 |
| Vertiefungen | 510 |
| Blockierungselement | 600 |

## Patentansprüche

1. Einstellvorrichtung (10) zur Einstellung zumindest einer optisch relevanten Baueinheit (20) eines Kraftfahrzeugscheinwerfers, welche Einstellvorrichtung (10) Folgendes umfasst:
- eine Antriebseinrichtung (100) mit einem entlang einer Verschubachse (X) linear verstellbaren ersten Stellelement (110), welches drehfest angeordnet ist und einen ersten Eingriffsabschnitt (111) aufweist,
- ein mit dem ersten Stellelement (110) in mechanischen Eingriff stehendes Übertragungselement (200), wobei das Übertragungselement (200) einen zu dem ersten Eingriffsabschnitt (111) des ersten Stellelements (110) korrespondierenden ersten Gegeneingriffsabschnitt (210) aufweist,
- eine Lagerungsbuchse (300), in welcher das Übertragungselement (200) mittels einem Lagerungsabschnitt (230) des Übertragungselements (200) drehbar um die Verschubachse (X) gelagert ist, wobei die Lagerungsbuchse (300) mit einem Tragerahmen (400) fest verbunden ist, wobei auf dem Tragerahmen (400) die zumindest eine optisch relevante Baueinheit (20) angeordnet ist, und
- ein zweites Stellelement (500), das um die Verschubachse (X) drehbar gelagert ist und einen zweiten Eingriffsabschnitt (510) aufweist, wobei das Übertragungselement (200) einen zweiten Gegeneingriffsabschnitt (220) aufweist, welcher zweite Gegeneingriffsabschnitt (220) dem ersten Gegeneingriffsabschnitt (210) des Übertragungselements (200) auf der Verschubachse (X) gegenüberliegend angeordnet ist, und wobei der zweite Gegeneingriffsabschnitt (220) mit dem zweiten Eingriffsabschnitt (510) in mechanischem Eingriff steht, und wobei das zweite Stellelement (500) in Kombination mit dem ersten Eingriffsabschnitt (111) des ersten Stellelements (110) dazu eingerichtet ist, eine Drehbewegung des zweiten Stellelements (500) in eine Hubbewegung des Übertragungselements (200) entlang der Verschubachse (X) zu wandeln.

2. Einstellvorrichtung nach Anspruch 1, **dadurch gekennzeichnet, dass** der erste Eingriffsabschnitt des ersten Stellelements (110) als Gewinde (111) ausgebildet ist und der erste Gegeneingriffsabschnitt des Übertragungselements (200) als erste Öffnung (210) mit einem zu dem Gewinde (111) korrespondierenden Gegengewinde (211) ausgebildet ist, wobei das Übertragungselement (200) über das Gegengewinde (211) zumindest teilweise auf dem ersten Stellelement (110) aufgeschraubt ist.

3. Einstellvorrichtung nach Anspruch 1 oder 2, **dadurch gekennzeichnet, dass** der zweite Gegeneingriffsabschnitt des Übertragungselements (200) als zweite Öffnung (220) ausgebildet ist, wobei das zweite Stellelement (500) verschiebbar entlang der Verschubachse (X) in der zweiten Öffnung (220) des Übertragungselements (200) gelagert ist.

4. Einstellvorrichtung nach Anspruch 3, **dadurch gekennzeichnet, dass** das zweite Stellelement (500) zumindest teilweise in der im Wesentlichen kreisförmigen, konzentrisch zur Verschubachse (X) angeordneten zweiten Öffnung (220) des Übertragungselements (200) aufgenommen ist, wobei das Übertragungselement (200) als Überdrehschutz elastische Zungen (240) aufweist, die am Umfang der zweiten Öffnung (220) angeordnet sind und sich entlang der Verschubachse (X) erstrecken, wobei die elastischen Zungen (240) Vorsprünge (241) aufweisen, die dazu eingerichtet sind, in auf dem zweiten Stellelement (500) angeordnete, korrespondierende Vertiefungen (510) einzugreifen.

5. Einstellvorrichtung nach Anspruch 4, **dadurch gekennzeichnet, dass** die Vorsprünge (241) in Form von achsenparallelen Zapfen und die dazu korrespondierenden Vertiefungen (510) als achsenparallele Rillen ausgeführt sind.

6. Einstellvorrichtung nach einem der Ansprüche 1 bis 5, **dadurch gekennzeichnet, dass** die Antriebseinrichtung (100) als linearer Stellmotor ausgebildet ist.

7. Einstellvorrichtung nach einem der Ansprüche 1 bis 6, **dadurch gekennzeichnet, dass** die Antriebseinrichtung (100) in Bezug auf den Tragerahmen (400) bewegungsfest angeordnet ist.

8. Einstellvorrichtung nach einem der Ansprüche 1 bis 7, **dadurch gekennzeichnet, dass** die Einstellvorrichtung (10) ein Blockierungselement (600) umfasst, welches in Kombination mit einem auf der Außenseite der Übertragungselements (200) angeordneten Anschlages (250) eingerichtet ist, eine Drehbewegung des Übertragungselements (200) um die Verschubachse (X) zu begrenzen.

9. Einstellvorrichtung nach einem der Ansprüche 1 bis 8, **dadurch gekennzeichnet, dass** der Lagerungsabschnitt (230) des Übertragungselements (200) als symmetrische Kugelschicht geformt ist, wobei die Lagerungsbuchse (300) eine zu der symmetrischen Kugelschicht korrespondierende Öffnung aufweist.

10. Einstellvorrichtung nach einem der Ansprüche 1 bis 9, **dadurch gekennzeichnet, dass** der Tragerahmen (400) horizontal angeordnet ist.

11. Einstellvorrichtung nach einem der Ansprüche 1 bis 10, **dadurch gekennzeichnet, dass** die Verschubachse (X) vertikal angeordnet ist, vorzugsweise im Wesentlichen orthogonal zum Tragerahmen (400) angeordnet ist.

12. Kraftfahrzeugscheinwerfer (30) mit einem Gehäuse (31) und zumindest einer optisch relevanten Baueinheit (20) sowie mit zumindest einer Einstellvorrichtung (10) gemäß der Ansprüche 1 bis 11.

13. Kraftfahrzeugscheinwerfer nach Anspruch 12, **dadurch gekennzeichnet, dass** die Antriebseinrichtung (100) mit dem Gehäuse (31) des Kraftfahrzeugscheinwerfers (30) fest verbunden ist.
